# DEMANDE DE BREVET EUROPEEN

(11) **EP 2 314 167 A1**
(43) Date de publication de la demande: **27.04.2011**
(21) Numéro de dépôt: 10181651.0
(22) Date de dépôt: 29.09.2010
(51) Int. Cl.: A21C 11/12

(54) **Outil de scarification**

(30) Priorité: 01.10.2009 FR 0956855
(71) Demandeur: Société Mure et Peyrot, 33041 Bordeaux Cedex (FR)
(72) Inventeur: Peyrot, Jean-Claude, 33200 Bordeaux (FR)
(74) Mandataire: Schmit, Christian Norbert Marie

(57) **Abrégé**

L'objet de l'invention est un outil de scarification comportant un porte lame (1), muni d'un manche (2) et d'une partie (3) de réception et de maintien d'une lame (5), et un dispositif de fermeture (6) pour lequel la partie (3) de réception et de maintien de la lame comporte un support guide pourvu d'une face courbe (4) de réception d'une face inférieure de la lame (5), le dispositif de fermeture (6) étant pourvu de moyens de rétention de la lame munis de segments (7) d'appui sur une face supérieure de la lame d'une courbure complémentaire à la courbure de ladite face courbe (4).

## Description

La présente invention concerne un outil de scarification particulièrement adapté à la réalisation de grignes sur le pain en scarifiant le dessus des pâtons afin de permettre aux gaz de s'échapper sans déchirer le pain lors de la cuisson.

Le document FR 2 859 356 au nom de la demanderesse propose un outil de scarification comportant un porte lame comportant deux branches incurvées se rejoignant à une extrémité du dispositif et un poussoir mobile adapté à contraindre la lame, de type lame de rasoir à deux faces tranchantes, dans une position incurvée.

Cet outil donne toute satisfaction mais le montage de la lame dans le porte lame ainsi que le maintien de la courbure de la lame peuvent être améliorés ce qui est l'objet de la présente invention.

Pour ce faire, la présente invention vise à réaliser un outil de scarification comportant un porte lame permettant un remplacement aisé de la lame et imposant une courbure définie à la lame par des parois guide en appui au dessus et au dessous de la lame.

Plus précisément, la présente invention propose un outil de scarification comportant un porte lame, muni d'un manche et d'une partie de réception et de maintien d'une lame, et un dispositif de fermeture **caractérisé en ce que** la partie de réception et de maintien de la lame comporte un support guide pourvu d'une face courbe de réception d'une face inférieure de la lame et en ce que le dispositif de fermeture est pourvu de moyens de rétention de la lame munis de segments d'appui sur une face supérieure de la lame d'une courbure complémentaire à la courbure de ladite face courbe.

Selon un mode de réalisation avantageux, le dispositif de fermeture s'articule sur le porte lame dans une zone intermédiaire du porte lame entre le manche et la partie de réception et de maintien de la lame.

Dans ce cas, le dispositif de fermeture et la zone intermédiaire comportent avantageusement des moyens complémentaires d'encliquetage du dispositif de fermeture sur le porte lame.

L'outil est avantageusement tel que la partie de réception et de maintien de la lame comporte un muret longitudinal de maintien transversal de la lame adapté à s'insérer dans une fente centrale longitudinale de la lame.

Préférablement, le muret de centrage comprend un renflement formant une colonne de retenue longitudinale de la lame adaptée à se loger dans une découpe élargie de la lame.

Le dispositif de fermeture et le porte lame comprennent avantageusement des moyens complémentaires d'accrochage mutuel a pression adaptés à contraindre la lame entre la partie de réception et de maintien et le dispositif de fermeture selon la courbure de la face courbe.

Les moyens complémentaires d'accrochage comprennent avantageusement des bossages ou ergots, disposés sur les flancs du muret côté partie de réception et sur des parois en regard des flancs du muret côté dispositif de fermeture.

Plus particulièrement, les parois se prolongent avantageusement d'un côté opposé aux segments d'appui par des oreilles de manoeuvre.

Selon un mode de réalisation particulier, les parois en regard du dispositif de fermeture font avantageusement partie d'ailes parallèles reliées par une traverse formant un axe de torsion des ailes sous l'action d'une pression sur les oreilles, la torsion des ailes étant adaptée à désengager les moyens complémentaires d'accrochage en sorte d'écarter le dispositif de fermeture et de libérer la lame.

Le dispositif de fermeture est avantageusement adapté à se manoeuvrer en rotation autour d'un axe de fixation arrière reçu de manière amovible dans un logement du porte lame.

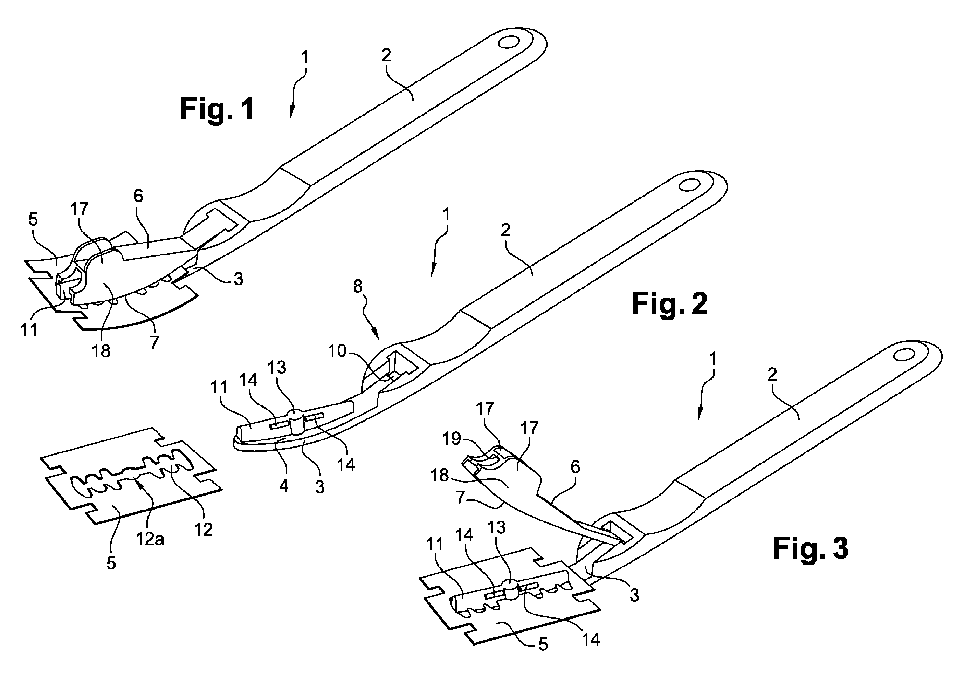

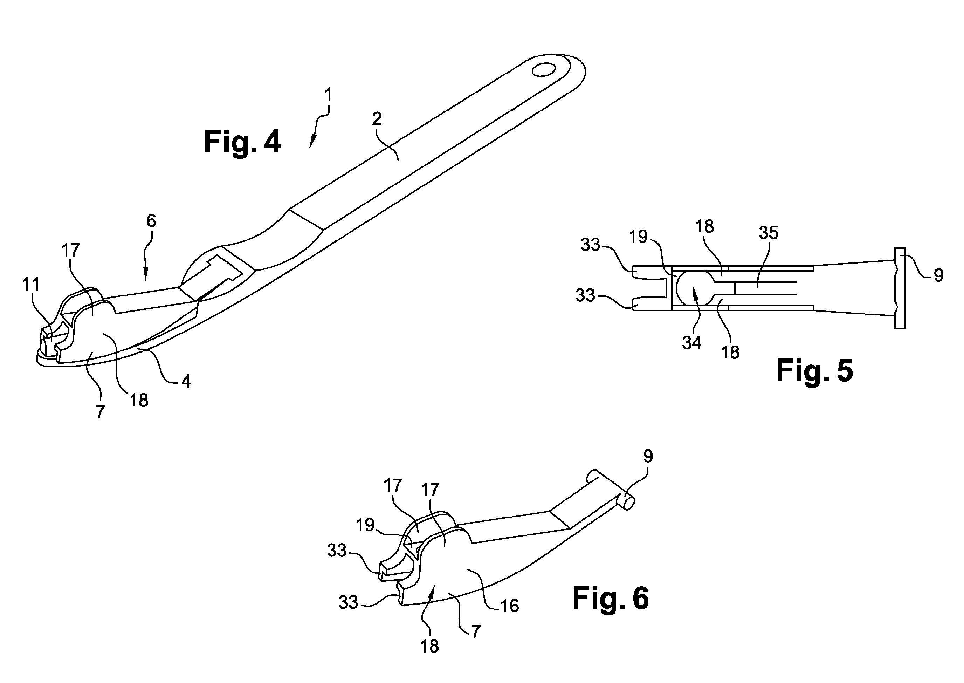

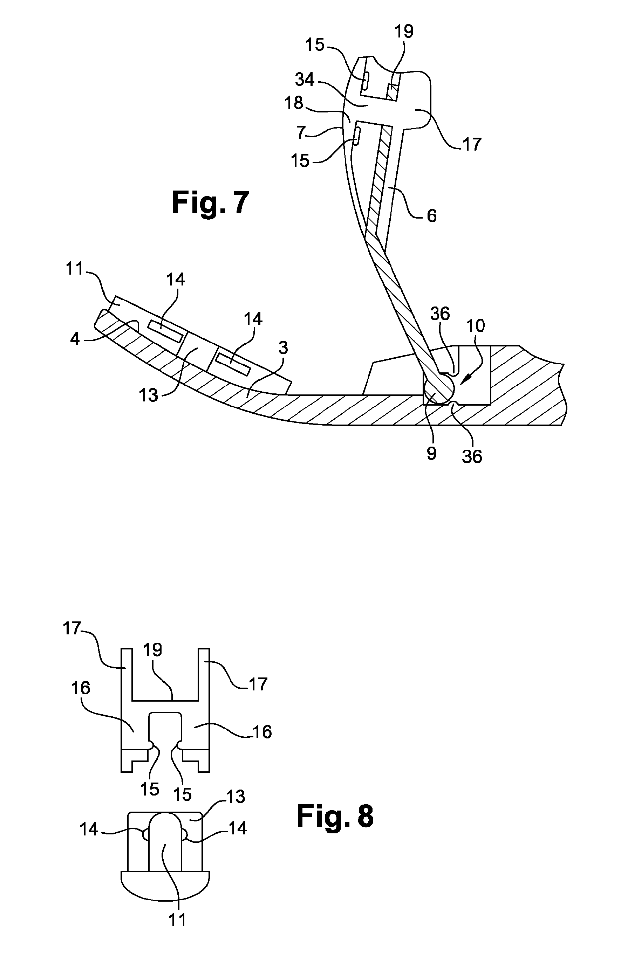

D'autres caractéristiques et avantages de l'invention seront apparents à la lecture de la description qui suit d'un exemple de réalisation non limitatif de l'invention en référence aux dessins qui représentent:
en figure 1: une vue en perspective d'un outil de scarification selon l'invention équipé de sa lame;
en figure 2: une vue en perspective du porte lame de l'outil de la figure 1 dispositif de fermeture retiré et lame écartée;
en figure 3: une vue en perspective de l'outil de la figure 1, dispositif de fermeture ouvert;
en figure 4: une vue en perspective de l'outil de la figure 1, dispositif de fermeture fermé sans lame;
en figure 5: une vue de dessus du dispositif de fermeture de lame de l'outil de la figure 1;
en figure 6: une vue en perspective du dispositif de fermeture de lame de la figure 5;
en figure 7: une vue en coupe longitudinale de l'avant de l'outil de la figure 1, dispositif de fermeture ouvert;
en figure 8: une vue de devant de la partie avant du porte lame et du dispositif de fermeture de la figure 1.

Un exemple d'outil de scarification selon l'invention est représenté en perspective équipé de sa lame à la figure 1.

Dans une direction longitudinale, l'outil comporte un porte lame 1 pourvu d'un manche 2, d'une zone intermédiaire 8 et d'une partie 3 de réception et de maintien d'une lame 5.

La lame 5 est une lame de rasoir à deux bords longitudinaux tranchants de type connu.

Un dispositif de fermeture 6 vient coiffer une partie centrale longitudinale de la lame et la maintenir sur la partie de réception et de maintien 3.

Selon l'invention, la partie de réception et de maintien 3 et le dispositif de fermeture comportent des faces en regard courbes, la face courbe 4 du porte lame étant la face supérieure d'un support guide de réception d'une face inférieure de la lame 5 et la face courbe en regard du dispositif de fermeture 6 étant réalisée sur des moyens de rétention de la lame munis de segments 7 d'appui sur une face supérieure de la lame.

Les segments 7, en forme de skis courbés longitudinalement, sont d'une courbure complémentaire à la courbure de ladite face courbe 4 pour contraindre et courber la lame 5 .

La figure 2 représente le porte lame 1 en perspective du dispositif de fermeture retiré et lame 5 écartée.

Ceci permet de voir la partie 3 de réception et de maintien de la lame qui comporte, sur le support guide courbe 4, un muret 11 longitudinal de maintien transversal de la lame adapté à s'insérer dans une fente centrale longitudinale 12 de la lame.

La fente longitudinale 12 de la lame comporte des indentations et une découpe élargie centrale circulaire 12a et le muret de centrage comprend un renflement formant une colonne 13 de retenue longitudinale de la lame adaptée à se loger dans la découpe élargie 12a de la lame 5.

Le muret et la colonne centrent donc parfaitement la lame dans les directions longitudinale et transversale.

La zone intermédiaire du porte lame comporte un logement 10 pour une articulation du dispositif de fermeture.

La figure 3 représente l'outil avec le dispositif de fermeture ouvert la lame étant posée sur le support guide courbe 4.

Dans cette position, la lame qui n'est pas contrainte peut être posée sur le porte lame ou retirée de ce denier sans grand risque.

Le dispositif de fermeture 6 s'articule sur le porte lame dans la zone intermédiaire 8 du porte lame entre le manche 2 et la partie 3 de réception et de maintien de la lame 5 et s'ouvre d'avant en arrière à la manière d'une mâchoire.

En figure 4 l'outil de la figure 1 est représenté en perspective dispositif de fermeture fermé sans lame. Cette figure permet de voir les profils complémentaires de la face supérieure du supporte guide avec sa forme courbe 4 et des segments courbes 7 du dispositif de fermeture 6.

Selon cette figure, le dispositif de fermeture se monte à cheval sur le muret 11, des oreilles 17 servant à désaccoupler le dispositif de fermeture du porte lame comme il sera vu plus loin.

Le dispositif de fermeture est représenté vu de dessus à la figure 5.

Il comporte un axe 9 servant à l'articuler sur le porte lame des bras 33 terminant des ailes 18 venant se positionner de part et d'autre du muret 11 du porte lame, un logement 34 recevant la colonne 13 du muret, une traverse 19 reliant les ailes 18 en avant du logement 34 et un voile 35 reliant les ailes à l'arrière du logement 34.

Le dispositif de fermeture est représenté en perspectives à la figure 5 permettant de représenter les oreilles 17 disposées au sommet des ailes 18 terminées par les bras 33.

Les parois 16 des ailes 18 se prolongent d'un côté opposé aux segments d'appui 7 par les oreilles 17 de manoeuvre, ces dernières étant écartées au maximum latéralement.

Les parois en regard du dispositif de fermeture faisant partie des ailes parallèles 18 sont reliées par la traverse 19.

La traverse 19 forme un axe de torsion des ailes 18 sous l'action d'une pression sur les oreilles 17.

La figure 8 est une vue de devant de la partie avant du porte lame et du dispositif de fermeture de la figure 1.

Elle permet de voir des moyens complémentaires d'accrochage mutuel a pression 14, 15 du dispositif de fermeture 6 et du porte lame 1.

Ces moyens d'accrochage sont adaptés par leur positionnement à contraindre la lame 5 entre la partie 3 de réception et de maintien et le dispositif de fermeture 6 selon la courbure de la face courbe 4.

Ils comprennent des bossages ou ergots, disposés sur les flancs du muret 11, côté partie de réception, et sur les parois 16 en regard des flancs du muret 11, côté dispositif de fermeture.

Pour fermer l'outil et fixer la lame courbée, il suffit de pousser les oreilles de haut en bas ce qui verrouille le dispositif de fermeture par encliquetage des bossages ou ergots 14, 15 en position de contrainte de la lame entre les segments 7 et les faces courbes 4.

L'encliquetage des bossage se fait par élasticité des ailes 18, les ailes s'écartant au passage des bossages 15 sur les bossages 14 du muret 11.

Pour libérer la lame il suffit de presser les oreilles dans un sens transversal ce qui tord les ailes autour de la traverse 19 selon un effet levier et écarte les bossages 15 des bossages 14.

La raideur de la lame la fait reprendre sa forme plane ce qui repousse le dispositif de fermeture vers le haut et ouvre la partie de réception de la lame.

Ainsi la torsion des ailes est adaptée à désengager les moyens complémentaires d'accrochage 14, 15 en sorte d'écarter le dispositif de fermeture et de libérer la lame.

La figure 7, vue en coupe longitudinale de l'avant de l'outil de la figure 1 dispositif de fermeture de lame ouvert, permet de mieux distinguer le logement 10 de réception des extrémités de l'axe 9 de rotation du dispositif de fermeture.

Ce logement de forme générale en L comporte une ouverture supérieure qui débouche dans un logement horizontal dans lequel on insère l'axe 9 du dispositif de fermeture 6.

On tire sur le dispositif de fermeture vers l'avant de l'outil jusqu'à encliquetage de l'axe 9 dans le fond du logement derrière des bossages de retenue 36.

Cette figure permet de distinguer la position de la traverse 19 vue en coup en partie avant du dispositif de fermeture, du logement 34 recevant la colonne 13 et des bossages 14 et 15 situés de part et d'autre de la colonne 13 et du logement 34 correspondant.

L'invention n'est pas limitée à l'exemple représenté et il est notamment possible de une disposition inversée du dispositif de fermeture qui s'articule sur l'avant du porte lame tout en restant dans le champ de protection défini par les revendications.

## Revendications

**1.** Outil de scarification comportant un porte lame (1), muni d'un manche (2) et d'une partie (3) de réception et de maintien d'une lame (5), et un dispositif de fermeture (6) **caractérisé en ce que** la partie (3) de réception et de maintien de la lame comporte un support guide pourvu d'une face courbe (4) de réception d'une face inférieure de la lame (5) et **en ce que** le dispositif de fermeture (6) est pourvu de moyens de rétention de la lame munis de segments (7) d'appui sur une face supérieure de la lame d'une courbure complémentaire à la courbure de ladite face courbe (4).

**2.** Outil de scarification selon la revendication 1 **caractérisé en ce que** le dispositif de fermeture (6) s'articule sur le porte lame dans une zone intermédiaire (8) du porte lame entre le manche (2) et la partie (3) de réception et de maintien de la lame (5).

**3.** Outil de scarification selon la revendication 2 **caractérisé en ce que** le dispositif de fermeture (6) et la zone intermédiaire (8) comportent des moyens complémentaires (9, 10) d'encliquetage du dispositif de fermeture (6) sur le porte lame (1).

**4.** Outil de scarification selon l'une quelconque des revendications précédentes **caractérisé en ce que** la partie (3) de réception et de maintien de la lame comporte un muret (11) longitudinal de maintien transversal de la lame adapté à s'insérer dans une fente centrale longitudinale (12) de la lame.

**5.** Outil de scarification selon la revendication 4 **caractérisé en ce que** le muret de centrage comprend un renflement formant une colonne (13) de retenue longitudinale de la lame adaptée à se loger dans une découpe élargie (12a) de la lame (5).

**6.** Outil de scarification selon l'une quelconque des revendications précédentes **caractérisé en ce que** le dispositif de fermeture (6) et le porte lame (1) comprennent des moyens complémentaires d'accrochage mutuel a pression (14, 15) adaptés à contraindre la lame (5) entre la partie (3) de réception et de maintien et le dispositif de fermeture (6) selon la courbure de la face courbe (4).

**7.** Outil de scarification selon les revendications 4 et 6 **caractérisé en ce que** les moyens complémentaires d'accrochage (14, 15) comprennent des bossages ou ergots, disposés sur les flancs du muret (11) côté partie de réception et sur des parois (16) en regard des flancs du muret (11) côté dispositif de fermeture.

**8.** Outil de scarification selon la revendication 7 **caractérisé en ce que** les parois (16) se prolongent d'un côté opposé aux segments d'appui (7) par des oreilles (17) de manoeuvre.

**9.** Outil de scarification selon la revendication 8 **caractérisé en ce que** les parois en regard du dispositif de fermeture font partie d'ailes parallèles (18) reliées par une traverse (19) formant un axe de torsion des ailes (18) sous l'action d'une pression sur les oreilles (17), la torsion des ailes étant adaptée à désengager les moyens complémentaires d'accrochage (14, 15) en sorte d'écarter le dispositif de fermeture et de libérer la lame.

**10.** Outil de scarification selon l'une quelconque des revendications précédentes **caractérisé en ce que** le dispositif de fermeture (6) est adapté à se manoeuvrer en rotation autour d'un axe de fixation arrière (9) reçu de manière amovible dans un logement (10) du porte lame.
